# EUROPEAN PATENT APPLICATION

(11) **EP 4 492 679 A1**
(43) Date of publication of application: **15.01.2025**
(21) Application number: 23382713.8
(22) Date of filing: 12.07.2023
(51) Int. Cl.: H02S 20/32

(54) **FLOATING SOLAR TRACKING DEVICE**

(71) Applicant: Soltec Innovations S.L., 30500 Molina de Segura Murcia (ES)
(72) Inventor: BERMEJO ROSIQUE, ÁNGELA, Murcia (ES); GUERRERO PÉREZ, JAVIER, Murcia (ES); MELÓN MENÉNDEZ, IGNACIO, Murcia (ES)
(74) Representative: Pons

(57) **Abstract**

The present invention relates to a floating solar tracking device comprising a central float (1), two lateral floats (2) and a structure for attaching photovoltaic panels (4), wherein the central float (1) comprises a spacer (10) that configures two independent chambers (5), the lateral floats (2) are sealed and filled with air, the structure in turn comprises a plurality of bulkheads (3) where the floats (1, 2) are stably attached, and a number of beams (8) that join the bulkheads (3) for attaching the photovoltaic panels (4), wherein each of the chambers (5) comprises a hole (6) for communication with a pump (7) responsible for introducing or extracting water from each chamber (5), the bulkheads (3) having a V-shaped configuration, with a base that joins the ends of the wings and a vertex.

## Description

### OBJECT OF THE INVENTION

The present invention relates to a device intended to be located floating on the water and that incorporates photovoltaic panels with the ability to be oriented based on the position of the sun throughout the day so that the photovoltaic panels can capture solar energy with maximum performance.

### BACKGROUND OF THE INVENTION

Focussing on the growing need for clean energy generation, solar fields are being installed on large tracts of land, on the roofs of industrial buildings and on the roofs of homes. Taking into account the limitation of expansion on on-shore land, the natural evolution of this technology is to expand to installations on bodies of water, such as lakes, reservoirs, seas, oceans, etc., where there would be much larger surfaces than at present and which remain unused.

In recent years, the use of fixed photovoltaic modules installed on devices with built-in floats to be located on the water has been spreading.

However, these solutions are no longer efficient as soon as the orientation of the photovoltaic panels is not adequate depending on the position of the sun.

In this way, an additional step consisted of developing solutions that performed solar tracking in floating installations. Solar tracking produces 15% more energy than current floating fixed installations.

Known floating solar trackers are, for the most part, a solar tracker that orients the panels on a floating platform that is fixed by moving an amount of water housed inside its structure, so that it can move the centre of gravity to one side or the other and thus achieve the suitable inclination.

Document WO2011/055900A2 discloses a photovoltaic apparatus according to the present invention which comprises: a cell panel on which a solar cell module for collecting sunlight and converting same into electricity is installed; a main frame installed below the cell panel, configured with at least three subframes partitioned into a plurality of hollow blocks sealed off from one another by partitions so as to store fluid, and providing buoyancy to expose the cell panel above the water level; a fluid transfer unit coupled to selectively communicate with the inside of each hollow block of the subframes, so as to feed or discharge fluid into/out from each hollow block in order to alter the centre of gravity of the main frame in the water; and a controller that analyses changes in the azimuth of the sun, controls the fluid transfer unit to alter the centre of gravity of the main frame according to the analysed data, and changes the orientation of the main frame.

Document KR20110101508 discloses a photovoltaic power generation apparatus. The photovoltaic power generation apparatus according to the present invention comprises: a solar cell module that collects sunlight and converts the collected sunlight into electrical energy; a frame including an upper frame in which the solar cell module is installed, a lower frame separated from the upper frame in the downward direction, and a hollow support frame interconnecting the upper frame and the lower frame and including a plurality of support frames spaced apart from one another, wherein the frame allows the solar cell module to be exposed outwardly from the water surface; a fluid supply unit that moves fluid from inside one of the support frames to the inside of another support frame such that the centre of gravity of the frame changes at the surface of the water and the posture of the frame changes; and a control unit that analyses the changes in the azimuth angle of sunlight and controls the fluid supply unit according to the data obtained from the analysis, so that the support frames are in communication with one another or closed with one another to change the centre of gravity of the frame.

Document US20140341 10A1 discloses a photovoltaic system able to float on water and tracking sun that includes a floating mechanism; an adjusting mechanism, combined with the floating mechanism; and a solar power mechanism, combining with the adjusting mechanism and located above the floating mechanism. This photovoltaic system can be located on the water surface, and has its floating mechanism to be under water by using the adjusting mechanism and the surrounding water source. The adjusting mechanism can be further used to adjust the solar power mechanism to a specific inclination angle according to the water level of the surrounding water and the sun-tracking angles that varies as the locations of the sun. Therefore, a novel photovoltaic system can be achieved with simplified configuration, accurate solar tracking, and higher power generation efficiency.

Document EP3800785A1 discloses an installation for photovoltaic power generation comprising at least one solar panel comprising a plurality of photovoltaic cells, and a buoyant support structure, the at least one solar panel being arranged on the support structure, the installation further comprising a subsystem for sun-tracking, the subsystem for sun-tracking comprising at least one compartment and means for controlling an amount of liquid in the at least one compartment, whereby the amount of liquid in the at least one compartment determines a degree of inclination of the support structure in relation to a horizontal plane. Also, a method comprising: arranging at least one solar panel on a buoyant support structure, the at least one solar panel comprising a plurality of photovoltaic cells; arranging a subsystem for sun-tracking, the subsystem for sun-tracking comprising at least one compartment and means for controlling an amount of liquid in the at least one compartment; arranging both the subsystem for sun-tracking and the at least one solar panel on the buoyant support structure on a surface of a marine environment; and changing a degree of inclination of the support structure in relation to a horizontal plane by changing the amount of liquid in the at least one compartment.

### DESCRIPTION OF THE INVENTION

The present invention discloses a floating solar tracking device comprising a central float, two lateral floats, located on both sides of the central float, and a structure for attaching a plurality of photovoltaic panels.

The central float includes a spacer that configures two independent and watertight chambers between them.

The lateral floats are sealed and filled with air or some other gas that provides good buoyancy conditions. They are watertight and without communication between them or with the central float.

For its part, the structure comprises a plurality of bulkheads where the floats are stably attached, and a number of beams that join the bulkheads together and serve for attaching the photovoltaic panels.

In order to proceed with the inclination of the device and thus be able to achieve the best performance in capturing the sun's rays depending on the position of the sun throughout the day, each of the cameras includes a hole for communication with a pump responsible for introducing or extracting water from each chamber and the corresponding valves and conduits, so that water can be introduced or extracted from each chamber. This management is carried out by electronic means that are sufficiently known and require no description.

In another embodiment, each chamber can be connected to a pump and even have both pumps connected to the two chambers, so that each one feeds one chamber but can serve as a backup in case the other pump breaks down.

Moreover, the bulkheads have a V-shaped configuration, with a base that joins the two wings and a vertex, focussed on buoyancy stability, with the vertex in the lower area. In this way, the central float is located between the vertex and the central area of the base, while the lateral floats are located at the ends of the base, extending transversely beyond the photovoltaic panels. In the same way, the holes are located at the end of the chambers closest to the vertex of the bulkhead, just like the pumps.

The chamber spacer can be a flexible membrane, so that the volume of the chambers can be varied by introducing water.

Preferably, the lateral and central floats have the same length and the device comprises three bulkheads evenly distributed along the length of the floats, one at each end and one in the central portion. However, if necessary, more than three bulkheads can be incorporated, those at the ends being fixed and the rest being evenly distributed between them.

The device can also comprise at least a pair of extensions intended to be attached to the bottom of the water where same is floating, so that orientation in the azimuthal direction is ensured and the device only has to be oriented in the direction of movement of the sun. These extensions are preferably attached to the bulkheads at the ends.

Furthermore, the device of the invention can be extended as much as required simply by connecting various devices together. For this, it is necessary that each of the chambers comprises two holes, each one at one end, symmetrically located, the holes being configured to be connected with the holes of another device. Moreover, in addition to two devices being connected through the holes, they can also be structurally connected, preferably through the beams or the end bulkheads.

### DESCRIPTION OF THE DRAWINGS

For a better understanding of the present invention, the figures listed below are included in this specification.
Figure 1 represents an upper perspective view of the solar float of the invention.
Figure 2 represents a lower perspective view of the solar float of the invention.
Figures 3 represent a front view of the float of the invention in three different positions depending on the inclination of the device with respect to the sun.

The following is a list of the references used in the figures to facilitate their follow-up:
1. Central float.
2. Lateral float.
3. Bulkheads.
4. Photovoltaic panels.
5. Chambers.
6. Holes.
7. Pumps.
8. Beams.
9. Water level.
10. Spacer.

### PREFERRED EMBODIMENT OF THE INVENTION

The present invention relates to a floating solar tracking device intended to be located floating in the water and which incorporates photovoltaic panels (4) to capture the sun's rays with the greatest efficiency.

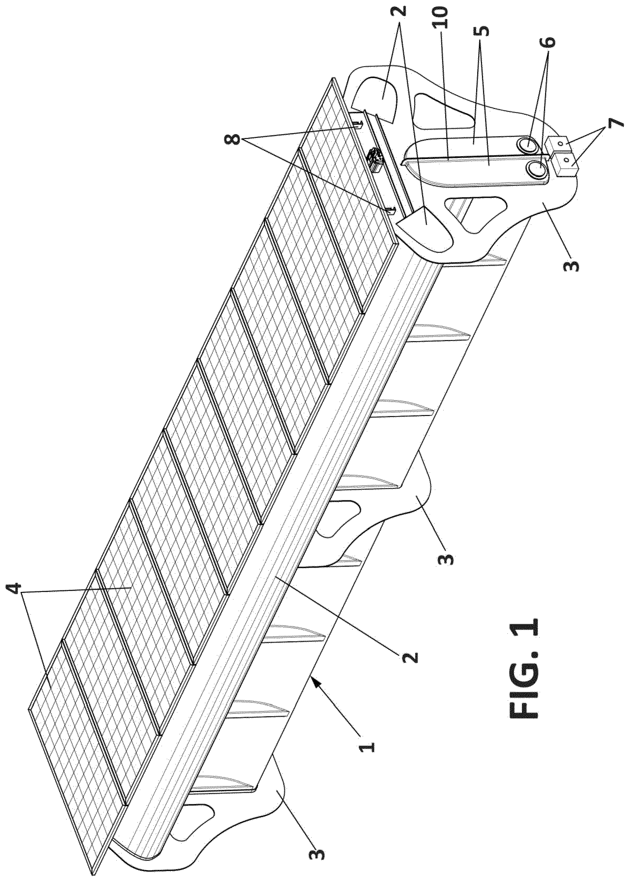

As shown in figure 1, the floating solar tracker of the invention consists of a device that incorporates photovoltaic panels (4) attached to bulkheads (3) where three independent floats (1, 2) are also attached: a central float (1), responsible for providing stability, and two lateral floats (2), responsible for the buoyancy of the device.

In order to cover as many photovoltaic panels (4) as required, the floats (1, 2) have an elongated configuration, so that the width of the device is defined by the bulkheads (3) and its length is as large as required. In turn, the width of the bulkheads (3) is defined by the size of the photovoltaic panels (4) intended to be housed.

The bulkheads (3) are sheets intended to give structural rigidity to the device and keep the whole unit together. The device preferably incorporates three bulkheads (3), located along the floats (1, 2) with an even separation between them although, if required due to the length of the device or the working conditions, a greater number of bulkheads (3) can be available without this affecting the operation of the invention.

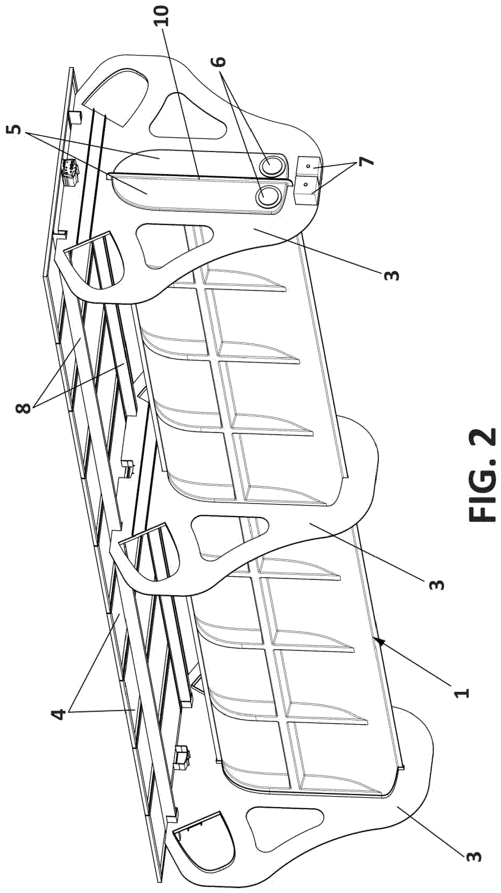

Figure 2 represents a view of the device of the invention seen from below. The lateral floats (2) have been removed to be able to show how the photovoltaic panels (4) are attached to the bulkheads (3) through a number of beams (8) that also attach the bulkheads (3) to one another, providing structural rigidity and stability to the device.

The central float (1) is divided into two chambers (5), each of them connected through a hole (6), located in the lower area, with a pump (7) responsible for extracting or introducing water into the corresponding chamber (5), including the required hydraulic elements, such as conduits and valves that have not been represented in the figures.

Thus, there can be a single pump (7) connected to the two chambers (5) or there can also be two pumps (7), each connected to one chamber. In this case, each one of the pumps (7) can also be connected to the two chambers (5), to solve cases of failure in the other pump (7).

The pumps (7) are attached to one of the bulkheads (3) close to the holes (6) of the chambers (5) in the lowermost area and transversely centred. This location not only causes the centre of gravity of the device to be in the lowest position, favouring that the photovoltaic panels (4) are always above the water level (9), but also causes the pump (7) not to work in vacuum because the hole (6) is out of the water, above the water level (9).

The chambers (5) of the central float (1) are divided by a spacer (10) that makes them independent. The spacer (10) can be rigid or, preferably, it can be configured by means of a waterproof flexible membrane, so that the volume of each of the chambers (5) is variable depending on the amount of water it stores.

The incorporation of a flexible membrane allows that, once the turn has started, a greater mass of water is loaded on one side, keeping the system inclined towards the side towards which rotation has started, increasing stability against undulations of water or wind, by preventing the system from rotating the other way.

Each of the lateral floats (2) is sealed and filled with air or some material with the lowest possible density. Its mission is to ensure that the device not only remains floating regardless of the external conditions in which it is placed, but also in a vertical position with the photovoltaic panels (4) above the water level (9). For this, as indicated, the device is configured to always adopt this position, not only because of the V-shaped configuration of the bulkheads (3), but also because of the location of the pumps (7) at the vertex of the bulkheads. (3).

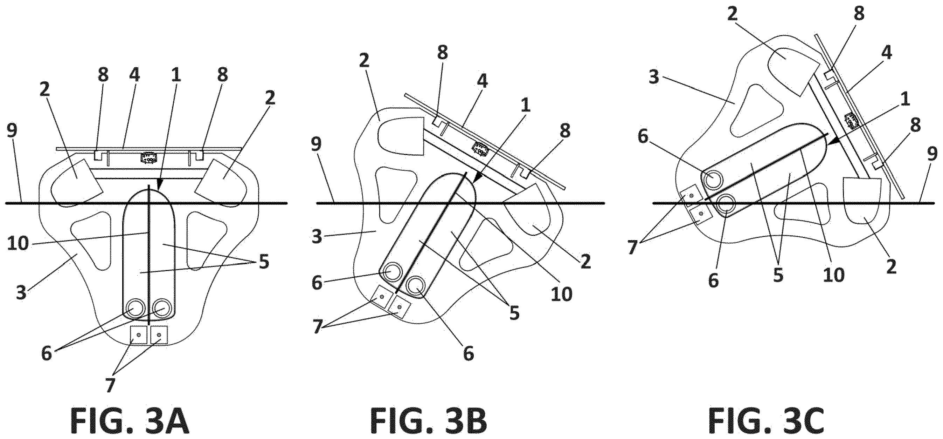

The lateral floats (2) have a cross section that is especially designed to increase the stability of the assembly against the undulations of the water. When the undulations of the water, or the wind loads on the device, unbalance the assembly, favouring the sinking thereof, the increase in the submerged cross section provides an increasing buoyancy response, favouring stability. For this reason, as can be seen especially in figure 3C, the lateral float (2) has a transversal cross section in the shape of a parabola with the vertex in the lowest area in the position in which the device is in the maximum rotation position.

Moreover, the chambers (5) of the central float (1) can include holes (6) at both ends, with transversal symmetry. Thus, several devices can be mechanically coupled through the beams (8) or the end bulkheads (3) and also hydraulically through the holes (6), so that the pumps (7) act on all the devices while connected to just one of them.

The controlled rotation of the device allows the capture plane of the photovoltaic panels (4) to be properly oriented to favour orientation to the sun, monitoring the solar position, maximising the radiation captured and obtaining a greater amount of electrical energy per surface area than with a fixed structure.

The control of the rotation is carried out by means of an asymmetrical filling of the central float (1), introducing more water in the chamber (5) located on the side towards which rotation is to be had.

The coordinated actuation of the pumps (7) allows the amount of water inside each chamber (5) of the central float (1) to be varied, and induces a disturbance in the device so that it rotates, in either of the two directions, up to an angle of 60 degrees, performing solar tracking.

This has been represented in figures 3. Thus, figure 3A represents the device in a position in which the sun is vertical to the device. Figure 3B represents the device in an inclined solar tracking position and Figure 3C is in the maximum inclination solar tracking position.

In addition, the lateral floats (2) preferably have a configuration with a transversal cross section similar to a parabola, although inclined 60 degrees with respect to the central float (1). The aim of this configuration is that when the device is at this maximum 60 degree inclination, the axis of the parabola is vertical and the lateral float prevents further sinking so that the further it sinks, the greater the thrust on the lateral float (2) and the more is the sinking of the device prevented.

The water with which the pumps (7) work comes from the outside, taken from the environment in which the device is located, operating in an open circuit.

The possibility of independent adjustment of each chamber (5) of the central float (1) makes it possible to gain more stability because, by not being limited to a certain amount of water, more stable balance positions can be reached, since balance is regulated on three points: each one of the two chambers (5) of the central float (1) and the lateral float (2) that rests on the water. The operating principle is based on the fact that the lateral floats (2) provide buoyancy, while the central float (1) focusses on compensating stability, as indicated.

An additional function of the central float (1) consists of the possibility of filling the two chambers (5) with water to raise the float line, positioning the water level (9) in a higher location with respect to the device, and thus reduce resistance to high winds.

Moreover, the configuration of the bulkheads (3) in a V shape, with a width at the upper base greater than that of the photovoltaic panels (4) causes the area where the lateral floats (2) are housed to be able to be located more to the outside than the photovoltaic panels (4), which implies that, even in a device position of maximum inclination, the photovoltaic panels (4) are not submerged.

It must be understood that the manipulation of the pumps (7) for filling and emptying the chambers (5) is carried out by electronic means known in the state of the art and about which no mention is made because a person skilled in the art would have no difficulty in embodying the device. These electronic means can incorporate software with the required programming to achieve the required inclination of the device based on the position of the sun.

Lastly, in the event of a total breakdown of the hydraulic system of the device, the central float (1) would remain full of water, but the lateral floats (2) have sufficient capacity to keep the device floating, so it is guaranteed that a malfunction or power failure for the activation of the pumps (7) may incur in the sinking of the device. To this end, the lateral floats (2) are dimensioned such that the sum of their volumes is capable of keeping the total mass of the assembly afloat.

## Claims

1. A floating solar tracking device comprising a central float (1), two lateral floats (2) located on both sides of the central float (1) and a structure for attaching a plurality of photovoltaic panels (4), the device being **characterised in that**:
- the central float (1) comprises a spacer (10) that configures two independent chambers (5);
- the lateral floats (2) are sealed and filled with air;
- the structure comprises:
- a plurality of bulkheads (3) where the floats (1, 2) are stably attached, and
- a number of beams (8) that join the bulkheads (3) for attaching the photovoltaic panels (4);
wherein:
- each of the chambers (5) comprises a hole (6) for communication with a pump (7) responsible for introducing or extracting water from each chamber (5), and
- the bulkheads (3) have a V-shaped configuration, with a base that joins the ends of the wings and a vertex.

2. The device of claim 1, wherein each of the chambers (5) comprises two holes (6) symmetrically positioned.

3. The device of claim 1 or 2, wherein the holes (6) are configured to be connected with the holes (6) of other devices.

4. The device of claim 1 or 2, wherein the hole (6) is located at one end of the chamber (5) closest to the vertex of the bulkhead (3).

5. The device of claim 1 or 2, wherein each chamber (5) is in communication with a pump (7).

6. The device of claim 1 or 5, wherein the pumps (7) are located at the vertex of the bulkhead (3).

7. The device of claim 1, wherein the spacer (10) is a flexible membrane.

8. The device of claim 1, wherein the floats (1, 2) have the same length.

9. The device of claim 8, comprising three bulkheads (3) evenly distributed along the floats (1, 2) from the ends.

10. The device of claim 1, wherein each of the lateral floats (2) is located at one end of the base of the bulkheads (3).

11. The device of claim 7, wherein the lateral floats (2) extend transversely beyond the photovoltaic panels (4).

12. The device of claim 1, wherein the lateral floats (2) have a transversal cross section in the shape of a parabola or the like.

13. The device of claim 1, comprising at least one pair of extensions intended to be attached to the bottom of the water where it is floating.

14. The device of claim 10, wherein the extensions are attached to the bulkheads (5) at the ends.
